# EUROPÄISCHE PATENTSCHRIFT

(11) **EP 0 975 514 B1**
(45) Veröffentlichungstag und Bekanntmachung des Hinweises auf die Patenterteilung: **05.09.2001**
(21) Anmeldenummer: 97929095.4
(22) Anmeldetag: 12.06.1997
(51) Int. Cl.: B63C 9/00, G08B 25/01

(54) **ELEKTRONISCHES NOTRUF- UND ORTUNGSSYSTEM ZUR RETTUNG VON SICH IN NOT BEFINDENDEN PERSONEN**
ELECTRONIC EMERGENCY CALL ANC LOCATING SYSTEM FOR RESCUING PERSONS IN DISTRESS
SYSTEME ELECTRONIQUE D'APPEL DE DETRESSE ET SYSTEME DE LOCALISATION POUR LE SAUVETAGE DE PERSONNES EN DETRESSE

(30) Priorität: 16.04.1997 DE 19715869
(43) Veröffentlichungstag der Anmeldung: 02.02.2000
(73) Patentinhaber: Hansmann, Karl-Heinz, 51503 Rösrath (DE); Linkenbach, Christiane, 51503 Rösrath (DE); Heinen, Lutz, 51063 Köln (DE)
(72) Erfinder: Hansmann, Karl-Heinz, 51503 Rösrath (DE); Linkenbach, Christiane, 51503 Rösrath (DE); Heinen, Lutz, 51063 Köln (DE)
(74) Vertreter: Werner, Hans-Karsten, Dr.Dipl.-Chem.
(86) Internationale Anmeldenummer: DE9701181
(87) Internationale Veröffentlichungsnummer: WO9846479

(56) Entgegenhaltungen:
- WO-A-96/13819
- US-A- 5 408 238

## Beschreibung

Elektronisches Notruf- und Ortungssystem zur Rettung von sich in Not befindender Personen.

Einfache Notrufsysteme basieren auf einer optischen und / oder akustischen Signalisierung.
Im wesentlichen handelt es sich dabei um:
- Rettungsbojen in Form eines aufblasbaren Ballons für Personen die an der Wasseroberfläche treiben,
- Signalfarbe zur intensiven Färbung der Wasseroberfläche,
- Signal-Notraketen,
- kleine Blitzlampen (bei Dunkelheit),
- Signalpfeifen.

Diese Notrufsysteme sind oft nur unzureichend, da Entfernung und ungünstige Wetterverhältnisse (Nebel, Unwetter, Dämmerung, reflektierendes Wasser, Dünung, Sturm etc.) ein Wiederauffinden der sich in Not befindenden Person unmöglich macht.

Die US-A-5,408,238 beschreibt einen Apparat, der als Boje ausgebildet ist, welche mit einem aktivierbaren SPS-System (Satellite Positioning System) ausgerüstet ist. Ist eine Person über Bord gegangen, so muß dies zunächst von einer zweiten Person bemerkt werden, welche dann die Boje möglichst in der Nähe der über Bord gegangenen Person im Wasser positioniert. Feststellbar ist bei diesem Apparat immer nur die aktuelle Position der Boje, nicht aber die der sich in Not befindlichen Person. Insbesondere wenn Querströmungen im Wasser auftreten, ist nicht sichergestellt, daß die Boje und die Person in die gleiche Richtung treiben. Es ist: somit nicht sichergestellt, daß die Position der Boje auch die Position der über Bord gegangenen Person ist. Demgegenüber wird das erfindungsgemäße Notruf- und Ortungssystem am Körper der zu schützenden Person verlustsicher so befestigt, daß eine störungsfreie Datenübermittlung per Funk zum Empfänger gewährleistet ist, ohne die Bewegungsfreiheit zu beeinträchtigen. Das erfindungsgemäße Notruf- und Ortungssystem besitzt beim Funkempfänger einen Rechner mit Display (Bildschirm) zur Auswertung und Darstellung der vom GPS-Modul und Funkempfänger empfangenen Daten, so daß die Position und Entfernung der zu rettenden Person auch von ungelernten und angelernten Personen abgelesen und bei der Rettung der Person herangezogen werden kann. In der US-A-5,408,238 ist zwar in Spalte 6, Zeilen 51 bis 54 erwähnt, daß das Gerät auch mit einem Display 35 ausgerüstet sein kann. Das ganze System ist aber von vornherein entwickelt und ausgestaltet worden, um von qualifiziertem Personal benutzt und eingesetzt zu werden.

Die WO 96/13819 beschreibt ein "Mann-über-Bord"-Alarmsystem, bei dem automatisch ein Alarm ausgelöst wird, wenn sich der Sender vom Empfänger über eine festgelegte Entfernung hinaus bewegt. Die Entfernung wird nicht mittels GPS-Daten bestimmt. Statt dessen wird die Entfernung des Senders zum Empfänger mittels Funkfeldstärkemessung bestimmt. Ein Alarm wird immer erst dann ausgelöst, wenn die gemessene Feldstärke unter einen voreingestellten Wert sinkt. Erst nach dem Auslösen des Alarms wird die Position des Senders, die vom Sender mittels GPS ermittelt wurde, an den Empfänger per Funk übertragen. Diese Position wird dann auf einem Display in Form von Längen- und Breitengrad angezeigt, also nur als absolute Position des Senders. Da dem Empfänger nur die absolute Position des Senders bekannt ist und der Empfänger selbst nicht mit GPS ausgestattet ist, kann auch keine Berechnung der Entfernung oder Richtung erfolgen. Eine Wiederauffinden des Senders ist somit nur durch manuelle Navigation möglich.

Elektronische Notrufsysteme werden bisher u. a. für den Kranken- und Pflegebereich, bei Lawinenverschüttungen und bei Unfällen in der Luftfahrt eingesetzt.
Im Kranken-Pflegebereich wird bei einem Notruf lediglich eine Personenkennung (Name, Zimmernummer etc.) über Funk zur Zentrale übermittelt. Befindet sich der Notrufende im Freien, kann somit sein Standort nicht festgestellt werden.
Das Lawinenverschütteten-Suchgerät arbeitet nach dem Annäherungsverfahren zum Verunfallten, d. h. zunächst muß der Bereich der Unfallstelle eingegrenzt werden, um gezielt den Verunfallten zu orten.

Notrufsender bei Unfällen in der Luftfahrt senden auf der internationalen Flug-Notruffrequenz. Die Reichweite beträgt auf flachem Terrain oder bei ruhiger See ca. 160 Kilometer und kann von einem in 6.000 Meter Höhe fliegenden Flugzeug empfangen werden.

Der in Patentanspruch 1 angegebenen Erfindung liegt das Problem zugrunde, ein Notruf- und Ortungssystem zu schaffen, welches bei jeder Witterung und auf einer Entfernung über Sicht- und Hörweite hinaus, die Position des Notrufenden, d. h. die Entfernung und Richtung zum Empfänger, schnell und exakt bestimmt.

Dieses Problem wird mit dem im Patentanspruch 1 aufgeführten Merkmalen gelöst.

Mit der Erfindung wird erreicht, daß sich in Not befindende Personen, mit Hilfe des Senders schnellstmöglich und ohne großer aktiver Mithilfe, abgesehen vom Einschalten des Senders, bei ihrem Ausgangspunkt, Standpunkt des Empfängers, bemerkbar machen können, so daß unmittelbar darauf gezielt deren Rettung eingeleitet werden kann.

Eine vorteilhafte Ausgestaltung der Erfindung ist im Patentanspruch 3 angegeben. Die Ausgestaltung des Elektronischen Notruf- und Ortungssystems nach Patentanspruch 3 ermöglicht dessen Einsatz auch an Orten, an denen keine externe Energiequelle vorhanden ist (z. B. Schlauchboot).

Eine weitere vorteilhafte Ausgestaltung der Erfindung ist im Patentanspruch 4 angegeben.
Die Ausgestaltung des Elektronischen Notruf- und Ortungssystems nach Patentanspruch 4 ermöglicht dessen Einsatz im Tauchbetrieb, bei dem der Empfänger am Ausgangspunkt verbleibt und die Notrufsender von den Tauchern während eines Tauchgangs mitgenommen werden können.

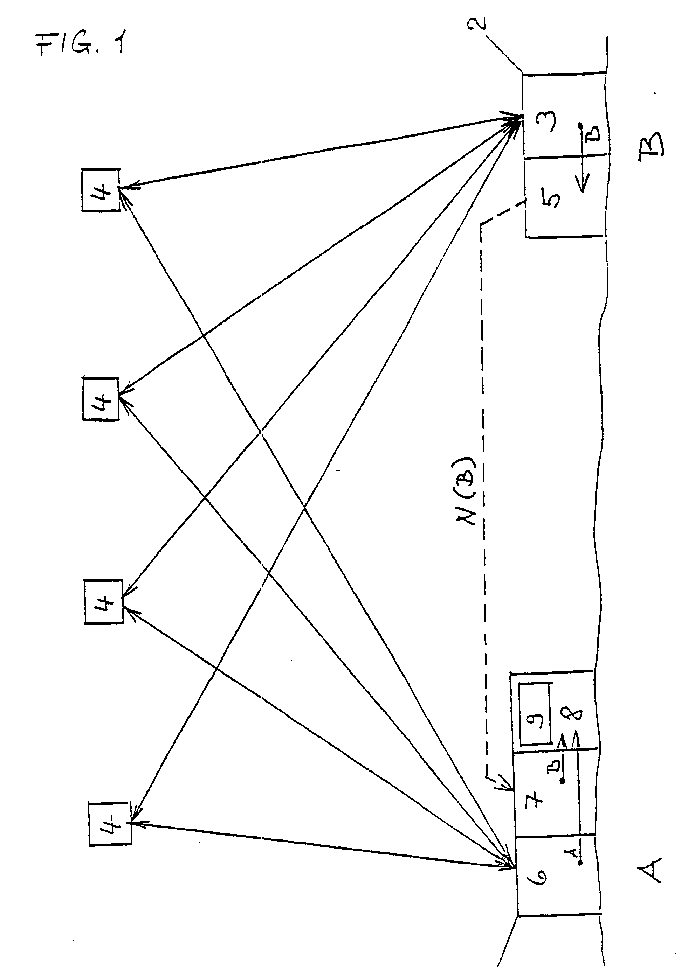

Ein Ausführungsbeispiel der Erfindung wird anhand der Fig. 1 erläutert.

Das Elektronische Notruf- und Ortungssystem Fig. 1 besteht aus Empfänger (1) und einem oder abhängig von der Anzahl der zu schützenden Personen mehrerer Notrufsender (2).

Der Notrufsender besteht aus zwei Komponenten:
- einem GPS-Modul (3), welches mittels der Daten von vorhandenen, speziellen Satelliten (4), die auf festen Umlaufbahnen die Erde umkreisen, ständig seine aktuelle Position (B) bestimmt;
- einem Funksendeteil (5), das die vom GPS-Modul (3) bestimmte aktuelle Position (B) des Notrufsenders als Notruf (N) über eine Trägerfrequenz zur Auswertung durch den Rechner (8) an den Empfänger (1) übermittelt.

Der Empfänger besteht aus drei Komponenten:
- einem GPS-Modul (6), welches mittels der Daten von vorhandenen, speziellen Satelliten (4), die auf festen Umlaufbahnen die Erde umkreisen, ständig seine aktuelle Position (A) bestimmt;
- einem Funkempfänger (7), welcher die Position (B) des Notrufenden als Notruf (N) empfängt;
- einem Rechnerteil (8), welches aus beiden Positionen (A) und (B) die Richtung und Entfernung des Notrufsenders (2) zum Empfänger (1) berechnet und diese auf seinem Display (9) in leicht verständlicher, graphischer Form anzeigt.

## Patentansprüche

1. Elektronisches Notruf-- und Ortungssystem zur Rettung von sich in Not befindenden Personen, wobei das System aus einem Empfänger und mindestens einem Notrufsender besteht und der Empfänger ein GPS-Modul (Global Positioning System) zu seiner eigenen Positionsbestimmung und einen Funkempfänger zum Empfang der Notrufe aufweist, und der Notrufsender ein GPS-Modul (Global Positioning System) zu seiner eigenen Positionsbestimmung und einen Sender aufweist, der über eine Trägerfrequenz diese Position als Notruf an den Empfänger übermittelt, **dadurch gekennzeichnet**, daß der Empfänger in einem Gehäuse außer dem GPS-Modul und dem Funkempfänger einen Rechner mit Display (Bildschirm) zur Auswertung und Darstellung der vom GPS-Modul und Funkempfänger empfangenen Daten aufweist und der Notrufsender sich im gleichen Gehäuse befindet wie das GPS-Modul und mit einem Befestigungssystem ausgestattet ist, um den Sender an der zu schützenden Person verlustsicher so zu befestigen, daß eine störungsfreie Datenübermittlung per Funk zum Empfänger gewährleistet ist, ohne die Bewegungsfreiheit zu beeinträchtigen.

2. Elektronisches Notrufsystem nach Anspruch 1, **dadurch gekennzeichnet**, daß der Rechner des Empfängers aus seiner eigenen ermittelten Position und aus der vom Notrufsender übermittelten Position die Entfernung und Richtung des Notrufsenders zum Empfänger berechnet und auf dem Display darstellt.

3. Elektronisches Notrufsystem nach Anspruch 1 oder 2, **dadurch gekennzeichnet**, daß das Gehäuse des Empfängers spritzwassergeschützt und für den portablen und stationären Einsatz geeignet ist, indem der Empfänger sowohl mit Akkus betrieben als auch an externe Energiequellen angeschlossen werden kann.

4. Elektronisches Notrufsystem nach einem der Ansprüche 1 bis 3, **dadurch gekennzeichnet**, daß das Gehäuse des Notrufsenders wasser- und druckdicht bis 21 bar = 200 m Wassertiefe ausgebildet ist und zur Energieversorgung eine Wechselbatterie/ Wechselakku mit Ladezustandskontrolle besitzt.

## Claims

1. An electronic distress call and position finding system for rescuing distressed people, wherein said system consists of a receiver and at least one distress call transmitter and said receiver includes a GPS (global positioning system) module for determining its own position and a radio receiver for receiving the distress calls and said distress call transmitter includes a GPS (global positioning system) module for determining its own position and a transmitter which transmits this position to the receiver as a distress call on a carrier frequency, **characterized in that** the receiver includes in addition to the GPS module and the radio receiver a computer having a display (screen) for evaluating and representing the data received from the GPS module and the radio receiver in one housing and the distress call transmitter is located in the same housing as the GPS module and is equipped with a securing system for securing the transmitter to the person to be protected so that it cannot get lost and an interference-free radio transmission of data to the receiver is ensured without restricting the freedom of movement

2. The electronic distress call system according to claim 1, **characterized in that** the computer of said receiver calculates the distance and direction of the distress call transmitter with respect to the receiver from its own determined position and the position transmitted from the distress call transmitter and represents them on the display.

3. The electronic distress; call system according to claim 1 or 2, **characterized in that** the housing of said receiver is splashproof and suitable for portable and stationary use due to the fact that said receiver can be both operated with storage batteries and connected to external power sources.

4. The electronic distress call system according to any of claims 1 to 3, **characterized in that** the housing of said distress call transmitter is designed to be waterproof and pressure-tight up to 21 bar = down to 200 m depth of water and possesses an easy-change battery/easy-change storage battery with a charge control for power supply.

## Revendications

1. Système d'appel au secours et de repérage pour le sauvetage de personnes se trouvant en détresse, le système étant constitué d'un récepteur et d'au moins un émetteur d'appel au secours et le récepteur présentant un module GPS (Global Positioning System) pour déterminer sa propre position, et un récepteur radio pour recevoir les appels au secours, et l'émetteur d'appel au secours présentant un module GPS (Global Positioning System) pour déterminer sa propre position et présentant un émetteur qui, sur une fréquence porteuse, transmet au récepteur cette position comme signal d'appel au secours,
**caractérisé en ce que** le récepteur présente, dans un boîtier, en dehors du module GPS et du récepteur radio, un calculateur avec affichage (écran) pour exploiter et représenter les données reçues par le module GPS et le récepteur radio et en ce que l'émetteur d'appel au secours se trouve dans le même boîtier que le module GPS, et est conçu avec un système de fixation destiné à fixer, sans risque de perte, l'émetteur sur la personne à protéger de telle façon qu'une transmission des données par radio au récepteur soit assurée, sans gêner la liberté de mouvement.

2. Système électronique d'appel au secours suivant la revendication 1, **caractérisé en ce que** le calculateur du récepteur, à partir de sa propre position déterminée, et à partir de la position transmise par l'émetteur d'appel au secours, calcule la distance et la direction de l'émetteur d'appel au secours par rapport au récepteur et les représente sur l'affichage.

3. Système électronique d'appel au secours suivant la revendication 1 ou la revendication 2, **caractérisé en ce que** le boîtier du récepteur est protégé contre les projections d'eau et est adapté pour une mise en oeuvre de façon portable et de façon stationnaire, le récepteur pouvant aussi bien être alimenté par des batteries, ou être raccordé à une source d'énergie extérieure.

4. Système électronique d'appel au secours suivant l'une des revendications 1 à 3, **caractérisé en ce que** le boîtier de l'émetteur d'appel au secours est réalisé étanche à l'eau et à la pression jusqu'à 21 bars, soit 200 m de profondeur sous-marine, et possède, pour son alimentation en énergie, une pile ou une batterie interchangeable, avec contrôle d'état de la charge.
